(19) Europäisches Patentamt
European Patent Office
Office européen des brevets

(11) EP 1 032 868 B1

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(21) Anmeldenummer: **98964350.7**

(22) Anmeldetag: **06.11.1998**

(51) Int Cl.$^7$: **G05B 23/02**

(86) Internationale Anmeldenummer:
**PCT/DE98/03250**

(87) Internationale Veröffentlichungsnummer:
**WO 99/027428 (03.06.1999 Gazette 1999/22)**

(54) **VERFAHREN ZUR BESTIMMUNG DER VERFÜGBARKEIT EINER TECHNISCHEN ANLAGE**

METHOD FOR DETERMINING THE AVAILABILITY OF A TECHNICAL FACILITY

PROCEDE POUR DETERMINER LA DISPONIBILITE D'UNE INSTALLATION TECHNIQUE

(84) Benannte Vertragsstaaten:
**CH DE FR GB IT LI NL SE**

(30) Priorität: **19.11.1997 DE 19751312**

(43) Veröffentlichungstag der Anmeldung:
**06.09.2000 Patentblatt 2000/36**

(73) Patentinhaber:
- **SIEMENS AKTIENGESELLSCHAFT**
  **80333 München (DE)**
- **Mergenthaler, Wolfgang**
  **65439 Flörsheim (DE)**

(72) Erfinder:
- **MERGENTHALER, Wolfgang**
  **D-65439 Flörsheim (DE)**
- **BURHENNE, Carsten**
  **D-91052 Erlangen (DE)**

(56) Entgegenhaltungen:
**EP-A- 0 643 345**
**EP-A- 0 694 825**
**EP-A- 0 810 554**
**EP-B- 0 242 609**
**EP-B- 0 626 697**
**EP-B- 0 667 013**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 032 868 B1

## Beschreibung

Die Erfindung betrifft ein Verfahren zur Bestimmung der Verfügbarkeit einer technischen Anlage, insbesondere eines Kraftwerkes, mit einer Vielzahl von technischen Systemen.

Die EP 0 810 554 A2 betrifft ein Darstellungsverfahren für ein technisches System. Die Darstellung erfolgt in einem Display. Das System ist pyramidenartig in verschiedene Stufen eingeteilt. Jeder Teil des Systems in einer Stufe, die nicht die unterste Stufe der Pyramide ist, weist eine Vielzahl von Sektionen auf. Die Darstellungsmethode betrifft die parallele Darstellung eines gewählten Systemteiles und seiner Sektionierung.

Die EP 0 694 825 A2 zeigt ein Leittechniksystem, insbesondere für ein Kraftwerk. In diesem Leittechniksystem sind Datenbasen, in denen Systemwissen gespeichert ist, hierarchisch aufeinander folgend angeordnet. Eine hierarchisch einer ersten Datenbank nachgeordnete zweite Datenbank wird aus dieser vorhergehenden Datenbank erzeugt. Mit dieser hierarchisch geordneten Datenbankstruktur wird die Analyse eines in dem System auftretenden Fehlers beschleunigt und vereinfacht.

Viele technische Anlagen, insbesondere Kraftwerke, müssen eine hohe Verfügbarkeit bzw. eine niedrige Standzeit aufweisen, um wirtschaftlich zu arbeiten. Für den Betreiber einer solchen technischen Anlage ist es wichtig, die Verfügbarkeit seiner technischen Anlage abschätzen zu können. Insbesondere ist es für diesen Betreiber interessant, in welchem Umfang er Ersatzteile bereit halten muß, um eine bestimmte Verfügbarkeit der technischen Anlage gewährleisten zu können.

Aufgabe der Erfindung ist es, ein Verfahren zur Bestimmung der Verfügbarkeit einer technischen Anlage anzugeben.

Erfindungsgemäß wird diese Aufgabe gelöst durch ein Verfahren zur Bestimmung der Verfügbarkeit einer technischen Anlage, mit einer Vielzahl von technischen Systemen,
die, angefangen von einer Grundebene, in hierarchisch aufeinanderfolgende Systemebenen eingeteilt werden, wobei für jedes System eine Überlebensfunktion (W(S,t)) berechnet wird, die die Wahrscheinlichkeit dafür angibt, daß das System (S) eine Zeit (t) überlebt;
mindestens ein System als ein Obersystem einer der Grundebene hierarchisch übergeordneten Systemebene ausgebildet ist, welches mindestens ein als Untersystem bezeichnetes System einer der übergeordneten Systemebene hierarchisch untergeordneten Systemebene umfaßt;
für das Obersystem die Überlebensfunktion mit Hilfe der Überlebensfunktion des Untersystems ermittelt wird;
die Verfügbarkeit aus den Überlebensfunktionen der Systeme berechnet wird.

Ein System, welches mindestens ein System, vorzugsweise eine Vielzahl von Systemen einer hierarchisch untergeordneten Systemebene umfaßt, wird also als ein Obersystem bezeichnet. Ein von einem Obersystem umfaßtes System wird als Untersystem bezeichnet.

Es wird ein Verfahren bereitgestellt, welches auch für komplexe technische Anlagen die Möglichkeit eröffnet, die Verfügbarkeit der technischen Anlage zu bestimmen. Dies wird dadurch erreicht, daß die Systeme in hierarchisch aufeinanderfolgende Systemebenen eingeteilt werden. Für jedes System wird nun eine Überlebensfunktion bestimmt. Diese Überlebensfunktion gibt für Zeiten in einem Zeitintervall die Wahrscheinlichkeit an, mit der das System diese Zeiten überlebt. Einer hohen Komplexität der technischen Anlage wird dadurch Rechnung getragen, daß die Überlebensfunktion eines Obersystems dadurch ermittelt wird, daß die Überlebensfunktionen seiner Untersysteme herangezogen werden. Diese rekursive Bestimmung der Überlebensfunktion eines Obersystems erfolgt für mindestens ein Obersystem, vorzugsweise aber für eine Vielzahl von Obersystemen.

Die Einteilung der technischen Anlage in hierarchisch aufeinanderfolgende Systemebenen und die rekursive Bestimmung von Überlebensfunktionen von Obersystemen aus den Überlebensfunktionen der Untersysteme eröffnet also erstmals die Möglichkeit, auch für eine sehr komplexe technische Anlage, z.B. ein Kraftwerk, die technische Verfügbarkeit zu ermitteln.

Bevorzugtermaßen wird eine mittlere fehlerfreie Funktionsdauer eines Systems durch die Beziehung

$$F(S) = \int_0^\infty W(S,t)dt$$

berechnet, wobei
F(S) die mittlere fehlerfreie Funktionsdauer eines Systems S und W(S,t) die Überlebensfunktion ist. Die mittlere fehlerfreie Funktionsdauer ist somit in einfacher Weise aus der Überlebensfunktion für das System ableitbar.

Bevorzugt wird jede Überlebensfunktion für eine beliebige Wahrscheinlichkeitsverteilung numerisch berechnet. Die Überlebensfunktion folgt einer bestimmten Wahrscheinlichkeitsverteilung, mit der das System zu einer bestimmten Zeit versagt. Diese Verteilung kann z.B. eine Gauß-Verteilung um die mittlere Lebensdauer des Systems sein. Indem die Überlebensfunktion numerisch berechnet wird, ist es nicht nötig, die funktionelle Form der Wahrscheinlichkeitsverteilung zu kennen, also ob es nun eine Gauß-Verteilung oder eine andere Verteilung ist.

Weiter bevorzugt erfolgt die numerische Berechnung für Zeiten, die voneinander in Schritten getrennt sind, wobei die Schritte durch eine adaptive Schrittweitenanpassung so gewählt sind, daß die für die Überlebensfunktion signifikante Zeitspanne in einer ausreichend dichten Schrittweite durchlaufen wird. Ein System weist nur für eine bestimmte Zeitspanne eine von null oder eins wesentlich verschiedene Wahrscheinlichkeit dafür auf, zu versagen. Diese Zeitspanne ist die signifikante Zeitspanne, die für das numerische Verfahren berücksichtigt werden muß. Entsprechend ist eine ausreichend dichte Schrittweite zu wählen.

Weiter bevorzugt wird die adaptive Schrittweitenanpassung mit Hilfe eines Intervallteilungsverfahrens, insbesondere mit einem logarithmischen Bisektionsverfahren, durchgeführt wird. Eine solche Schrittweitenanpassung ist besonders effizient und schnell durchführbar.

Bevorzugt ist jedes nicht zur Grundebene gehörende System ein Obersystem. Weiter bevorzugt umfaßt ein Obersystem mindestens zwei Untersysteme, insbesondere eine Vielzahl von Untersystemen. Diese Ausgestaltung entspricht einer Anordnung von sich baumartig verzweigenden Systemebenen. Von der Grundebene gelangt man mit jeder höherstehenden Systemebene zu einer niedrigeren Anzahl von Systemen. In einer solchen Struktur ist es besonders effizient, die Überlebensfunktionen der Systeme einer Systemebene rekursiv aus Überlebensfunktionen von Systemen der vorhergehenden Systemebene abzuleiten.

Bevorzugt umfaßt jedes System eine Anzahl von Komponenten, wobei für jede Komponente eine Bedeutungszahl ermittelt wird, die die Wahrscheinlichkeit angibt, mit der ein Fehler des Systems durch diese Komponente verursacht wird. Bevorzugtermaßen wird die Überlebensfunktion eines Systems mit Hilfe der Lebensdauer für jede Komponente und aus der dieser Komponente zugewiesenen Bedeutungszahl ermittelt. Ein solches Verfahren stellt eine besonders leistungsfähige Variante des Verfahrens zur Bestimmung der Verfügbarkeit einer technischen Anlage dar. Mit Hilfe der für eine Komponente ermittelten Bedeutungszahl ist man nämlich in der Lage, der Wahrscheinlichkeit Rechnung zu tragen, mit der die Komponente zu einem Versagen des Systems, in dem sie angeordnet ist, beiträgt. Insbesondere können so komplexe redundante Strukturen berücksichtigt werden. Indem redundante Komponenten vorgesehen sind, ist selbst bei einem kompletten Ausfall einer Komponente noch eine weitere Funktionsfähigkeit des Systems gewährleistet sein. In solchen redundanten Strukturen ist es also nicht zweckmäßig, alleine aufgrund der Lebensdauern der Komponenten auf eine Überlebensfunktion des Systems zu schließen. Erst die ermittelte Bedeutungszahl läßt auch für redundante Strukturen eine signifikante Aussage über die Überlebensfunktion des Systems zu.

Bevorzugt wird für jedes System eine mittlere Reparaturdauer berechnet. Weiter bevorzugt wird die mittlere Reparaturdauer nach

$$R(S) = \sum_{K=1}^{n} \left( B_K(S) \cdot (RT_K + q_K \cdot LT_K) \right.$$

bestimmt, wobei
R(S) die mittlere Reparaturdauer für das System S,
$B_K(S)$ die Bedeutungszahl der Komponente K des Systems S,
n die Anzahl der Komponenten K des Systems S,
$RT_K$ die Repararturzeit für die Komponente K,
$LT_K$ die Lieferfrist für eine Lieferung der Komponente K und
$q_K$ die Wahrscheinlichkeit dafür ist, daß die Komponente K nicht sofort verfügbar ist.

Bevorzugtermaßen wird die Verfügbarkeit der technischen Anlage aus dem Zusammenhang

$$V = \frac{1}{1 + \sum_{S=1}^{N} \left( \frac{G_S}{G} \cdot \frac{R(S)}{F(S)} \right)}$$

ermittelt, wobei

N die Anzahl der Systeme S,
$G_S$ die Anzahl der Komponenten des Systems S und
G die Gesamtzahl aller Komponenten ist.

Die Verfügbarkeit V der technischen Anlage wird mit Hilfe der mittleren fehlerfreien Funktionsdauern der Systeme und mit den mittleren Reparaturdauern der Systeme durch eine Zahl zwischen 0 und 1, entsprechend einer Angabe in Prozenten zwischen 0 und 100%, angegeben.

Bevorzugt ist die technische Anlage ein Kraftwerk. Kraftwerke stellen eine besonders große und komplexe technische Anlage dar. Erst durch die Einteilung der Kraftwerkssysteme in hierarchisch aufeinanderfolgende Systemebenen und durch die rekursive Bestimmung der Überlebensfunktion von Obersystemen wird es möglich, auch für ein Kraftwerk eine zuverlässige Angabe über die Verfügbarkeit zu treffen. Für einen Kraftwerksbetreiber ist es von hoher wirtschaftlicher und technischer Relevanz, insbesondere hinsichtlich der Betriebssicherheit, eine Abschätzung der Verfügbarkeit des Kraftwerks zu erhalten.

Bevorzugt wird das Verfahren zur Bestimmung eines funktionellen Zusammenhangs zwischen aufzubringenden Kosten für ein Ersatzteilsortiment für die technische Anlage und der daraus folgenden maximalen Verfügbarkeit der technischen Anlage angewendet. Weiter bevorzugt wird für vorgegebene Kosten ein Ersatzteilsortiment so ausgewählt, daß sich eine nahezu maximale Verfügbarkeit ergibt. Bevorzugtermaßen wird für einen vorgegebenen Wert für die Verfügbarkeit ein Ersatzteilsortiment so bestimmt, daß sich nahezu minimale Kosten für das Ersatzteilsortiment ergeben. Die Verfügbarkeit einer technischen Anlage wird maßgeblich dadurch bestimmt, welche Ersatzteile verfügbar sind. Ein nahezu unerschöpfliches Ersatzteilsortiment wird eine hohe Verfügbarkeit gewährleisten, da jederzeit für ein zu reparierendes System auf Ersatzteile zurückgegriffen werden kann. Aus Kostengründen ist aber ein zu großes Ersatzteilsortiment nicht sinnvoll. Es wird somit ein bestimmtes Ersatzteilsortiment geben, welches entweder für vorgegebene Kosten für das Ersatzteilsortiment eine möglichst große Verfügbarkeit oder für einen vorgegebenen Wert für die Verfügbarkeit minimale Kosten für das Ersatzteilsortiment ergibt. Das Verfahren zur Bestimmung der Verfügbarkeit der technischen Anlage liefert somit ein leistungsfähiges Instrument für die Auswahl eines solchen geeigneten Ersatzteilsortiments.

Bevorzugt wird das Ersatzteilsortiment dadurch ausgewählt, daß

a) mit einem leeren Ersatzteilsortiment begonnen wird;
b) aus einer Ersatzteilgrundmenge ein solches Ersatzteil dem Ersatzteilsortiment hinzugefügt wird, welches den größten Wert W für das Verhältnis

$$W = AI/P$$

liefert, wobei AI der Wert für die Steigerung der Verfügbarkeit durch das Ersatzteil und P der Preis des Ersatzteiles ist;
c) der Schritt b) solange wiederholt wird, bis das Ersatzteilsortiment vollständig ist.

Die Erfindung wird anhand der Zeichnung in einem Ausführungsbeispiel näher erläutert. Es zeigen:

FIG 1 eine schematisch dargestellte Systemeinteilung einer technischen Anlage,

FIG 2 ein schematisch dargestelltes, aus Komponenten zusammengesetztes System,

FIG 3 den schematischen Verlauf einer Überlebensfunktion für ein System, und

FIG 4 die Verfügbarkeit einer technischen Anlage in Abhängigkeit von den aufzubringenden Kosten für ein Ersatzteilsortiment.

Figur 1 zeigt schematisch eine Systemeinteilung einer technischen Anlage 1. Die technische Anlage 1 ist aus Systemen $S_l$, l = 1 bis 16, aufgebaut. Die Systeme $S_1$ bis $S_8$ sind in einer Systemebene A angeordnet. Hierarchisch der Systemebene A übergeordnet ist eine Systemebene B angeordnet, die die Systeme $S_9$ bis $S_{13}$ enthält. Hierarchisch der Systemebene B übergeordnet ist eine Systemebene C angeordnet, die die Systeme $S_{14}$ bis $S_{16}$ enthält. Das System $S_{10}$ der Systemebene B umfaßt die Systeme $S_2$, $S_3$ und $S_4$ der Systemebene A. Das System $S_{11}$ umfaßt ebenfalls das System $S_4$ und das System $S_5$. Das System $S_{12}$ umfaßt das System $S_6$ und $S_7$. Dsa System $S_{13}$ umfaßt das System $S_8$. In der Systemebene C umfaßt das System $S_{14}$ die Systeme $S_9$ und $S_{10}$ der Systemebene B. Das System $S_{15}$ umfaßt das System $S_{11}$. Das System $S_{16}$ umfaßt das System $S_{12}$ und $S_{13}$.

Für jedes System $S_l$ wird eine Überlebensfunktion $W(S_l,t)$ bestimmt. Das ist die Wahrscheinlichkeit dafür, daß

das System S eine Zeit t überlebt, also fehlerfrei funktioniert. Dabei wird für die Systeme $S_I$, die mindestens ein System $S_I$ aus einer tiefergestellten Systemebene A,B umfassen und Obersystem OS genannt werden, die Überlebensfunktion $W(S_I,t)$ aus der oder den Überlebensfunktionen $W(S_I,t)$ der vom Obersystem OS erfaßten Untersysteme US ermittelt. Als Untersystem US wird ein von einem Obersystem OS umfaßtes System S bezeichnet. Beispielsweise wird für die Untersysteme US,$S_2$; US,$S_3$ und US, $S_4$ der Systemebene A jeweils eine Überlebensfunktion $W(S_I,t)$ ermittelt. Aus diesen Werten wird die Überlebensfunktion $W(S_{10},t)$ des Systems $S_{10}$ bestimmt, da das System $S_{10}$ ein Obersystem OS der Untersysteme US,$S_2$; US,$S_3$ und US,$S_4$ ist.

Aus der Überlebensfunktion $W(S_I,t)$ läßt sich eine mittlere fehlerfreie Funktionsdauer $F(S_I)$ bestimmen. Diese wird aus dem Zusammenhang

$$F(S_I) = \int_0^\infty W(S_I,t)dt$$

berechnet.

Für jedes System $S_I$ wird weiterhin eine mittlere Reparaturdauer $R(S_I)$ bestimmt. Mit den mittleren fehlerfreien Funktionsdauern $F(S_I)$ und den mittleren Reparaturdauern $R(S_I)$ wird dann die Verfügbarkeit V der technischen Anlage 1 errechnet aus dem Zusammenhang:

$$V = \frac{1}{1 + \sum_{S=1}^{N} \left( \frac{G_S}{G} \cdot \frac{R(S)}{F(S)} \right)}$$

In Figur 2 ist ein aus Komponenten $K_I$, I = 1 bis 10, aufgebautes System S schematisch dargestellt. Eine Redundanzstruktur des Systems S ist hier als Parallel- und Reihenschaltung der Komponenten $K_I$ abgebildet. Die Komponenten $K_5$ und $K_6$ sind zueinander in Reihe und parallel zu den Komponenten $K_3$ und $K_4$ geschaltet, wobei die Komponenten $K_3$ und $K_4$ zueinander wieder in Reihe geschaltet sind. In gleicher Weise sind die Komponenten $K_9$ und $K_{10}$ parallel zu den Komponenten $K_7$ und $K_8$ geschaltet. Der Block aus den Komponenten $K_3$ bis $K_6$ ist in Reihe zu dem Block aus den Komponenten $K_7$ bis $K_{10}$ geschaltet. Die Komonenten $K_1$ und $K_2$ sind zueinander in Reihe und parallel zu der Gesamtheit der Komponenten $K_3$ bis $K_{10}$ geschaltet.

Eine Parallelschaltung demonstriert hier die Redundanz von Komponenten. Beispielsweise werden die Komponenten $K_3$ und $K_4$ durch die Komponenten $K_5$ und $K_6$ ersetzt. Die Komponenten $K_7$ und $K_8$ sind redundant durch die Komponenten $K_9$ und $K_{10}$ vorhanden. Ein Ausfall der Komponente $K_7$ bedeutet somit nicht notwendigerweise einen Ausfall für das System S. Es wird nun jeder Komponente $K_I$ eine Bedeutungszahl $B_K(S)$ zugewiesen, die der Wahrscheinlichkeit entspricht, mit der diese Komponente $K_I$ einen Ausfall des Systems S hervorruft. Mit Hilfe der Lebensdauern der Komponenten $K_I$ und ihrer jeweiligen Bedeutungszahlen $B_K(S)$ läßt sich die Überlebensfunktion W(S,t) für das System S berechnen. Sie ist schematisch in Figur 3 wiedergegeben. Für jedes System S läßt sich aus der in Figur 3 schematisch gezeigten Überlebensfunktion W(S, t) eine mittlere fehlerfreie Funktionsdauer F(S) nach dem oben genannten Zusammenhang berechnen.

In Figur 4 ist schematisch jeweils die Verfügbarkeit V der technischen Anlage 1 für einen bestimmten Wert für die Kosten eines Ersatzteilsortiments dargestellt. Aus diesem Zusammenhang läßt sich das wirtschaftlich günstigste Verhältnis von Verfügbarkeit V und aufzubringenden Kosten gewinnen. Dieser Zusammenhang ist beispielsweise für den Betreiber eines Kraftwerks von großem Vorteil. Er ist in der Lage, seine Investitionen für ein Ersatzteilsortiment auf die gewünschte Verfügbarkeit V des Kraftwerks abzustimmen. Mit dem beschriebenen Verfahren zur Bestimmung der Verfügbarkeit einer technischen Anlage 1 ist man erstmals für sehr komplexe technische Anlagen in der Lage, den Zusammenhang zwischen der Verfügbarkeit V und den aufzubringenden Kosten für ein Ersatzteilsortiment aufzustellen.

## Patentansprüche

1. Verfahren zur Bestimmung der Verfügbarkeit (V) einer technischen Anlage (1),

mit einer Vielzahl von technischen Systemen (S), die, angefangen von einer Grundebene (A), in hierarchisch aufeinanderfolgende Systemebenen (A,B,C) eingeteilt werden, wobei
für jedes System (S) eine Überlebensfunktion (W(S,t)) berechnet wird, die die Wahrscheinlichkeit dafür angibt, daß das System (S) eine Zeit (t) überlebt;
mindestens ein System (S) als ein obersystem (OS) einer der Grundebene (A) hierarchisch übergeordneten Systemebene (B,C) ausgebildet ist, welches mindestens ein als Untersystem (US) bezeichnetes System (S) einer der übergeordneten Systemebene (B,C) hierarchisch untergeordneten Systemebene (A,B) umfaßt; für das Obersystem (OS) die Überlebensfunktion (W(OS,t)) mit Hilfe der Überlebensfunktion (W(US,t)) des Untersystems (US) ermittelt wird;
die Verfügbarkeit (V) aus den Überlebensfunktionen (W(S,t)) berechnet wird;
eine mittlere fehlerfreie Funktionsdauer (F(S)) für ein System (S) durch die Beziehung

$$F(S) = \int_0^\infty W(S,t)dt$$

berechnet wird, wobei
F(S) die mittlere fehlerfreie Funktionsdauer des Systems S und W(S,t) die Überlebensfunktion des Systems (S) ist.

**2.** Verfahren nach Anspruch 1,
bei dem jede Überlebensfunktion W(S) für eine beliebige Wahrscheinlichkeitsverteilung numerisch berechnet wird.

**3.** Verfahren nach Anspruch 2,
bei dem die numerische Berechnung für Zeiten (t) erfolgt, die voneinander in Schritten getrennt sind, wobei die Schritte durch eine adaptive Schrittweitenanpassung so gewählt sind, daß die für die Überlebensfunktion (W(S, t)) signifikante Zeitspanne in einer ausreichend dichten Schrittweite durchlaufen wird.

**4.** Verfahren nach Anspruch 3,
bei dem die adaptive Schrittweitenanpassung mit Hilfe eines Intervallteilungsverfahrens, insbesondere mit einem logarithmischen Bisektionsverfahren, durchgeführt wird.

**5.** Verfahren nach einem der vorhergehenden Ansprüche,
bei dem jedes nicht zur Grundebene (A) gehörende System (S) ein Obersystem (OS) ist.

**6.** Verfahren nach einem der vorhergehenden Ansprüche,
bei dem ein Obersystem (OS) mindestens zwei Untersysteme (US), insbesondere eine Vielzahl von Untersystemen (US), umfaßt.

**7.** Verfahren nach einem der vorhergehenden Ansprüche,
bei dem jedes System (S) eine Anzahl von Komponenten (K) umfaßt, wobei für jede Komponente (K) eine Bedeutungszahl ($B_K$(S)) ermittelt wird, die die Wahrscheinlichkeit angibt,
mit der ein Fehler des Systems (S) durch diese Komponente (K) verursacht wird.

**8.** Verfahren nach Anspruch 7,
bei dem die Überlebensfunktion (W(S,T)) eines Systems (S) mit Hilfe der Lebensdauer für jede Komponente (K) und aus der dieser Komponente (K) zugewiesenen Bedeutungszahl ($B_K$(S)) ermittelt wird.

**9.** Verfahren nach einem der vorhergehenden Ansprüche,
bei dem für jedes System (S) eine mittlere Reparaturdauer (R(S)) berechnet wird.

**10.** Verfahren nach Anspruch 9 und 7,
bei dem die mittlere Reparaturdauer (R(S)) nach

$$R(S) = \sum_{K=1}^{n} \left( B_K(S) \cdot (RT_K + q_K \cdot LT_K) \right)$$

bestimmt wird, wobei
$R(_S)$ die mittlere Reparaturdauer für das System S,
$B_K(S)$ die Bedeutungszahl der Komponente K des Systems S,
n die Anzahl der Komponenten K des Systems S,
$RT_K$ die Reparaturzeit für die Komponente K,
$LT_K$ die Lieferfrist für eine Lieferung der Komponente K und
$q_K$ die Wahrscheinlichkeit dafür ist, daß die Komponente K nicht sofort verfügbar ist.

**11.** Verfahren nach Anspruch 9 oder 10 und nach Anspruch 1, 2, 3 oder 4,
bei dem die Verfügbarkeit (V) aus dem Zusammenhang

$$V = \frac{1}{1 + \sum_{S=1}^{N} \left( \frac{G_S}{G} \cdot \frac{R(S)}{F(S)} \right)}$$

ermittelt wird, wobei
V die Verfügbarkeit,
N die Anzahl der Systeme S,
$G_S$ die Anzahl der Komponenten K des Systems S und
G die Gesamtzahl aller Komponenten K ist.

**12.** Verfahren nach einem der vorhergehenden Ansprüche, bei dem die technische Anlage (1) ein Kraftwerk ist.

**13.** Verwendung des Verfahrens nach einem der vorhergehenden Ansprüche zur Bestimmung eines funktionellen Zusammenhanges zwischen aufzubringenden Kosten für ein Ersatzteilsortiment für die technische Anlage (1) und einer daraus folgenden maximalen Verfügbarkeit (V) der technischen Anlage.

**14.** Verwendung nach Anspruch 13,
bei der für vorgegebene Kosten ein Ersatzteilsortiment so ausgewählt wird, daß sich eine nahezu maximale Verfügbarkeit (V) ergibt.

**15.** Verwendung nach Anspruch 13,
bei der für einen vorgegebenen Wert für die Verfügbarkeit (V) ein Ersatzteilsortiment so bestimmt wird, daß sich nahezu minimale Kosten für das Ersatzteilsortiment ergeben.

**16.** Verwendung nach Anspruch 14 oder 15,
bei der das Ersatzteilsortiment dadurch ausgewählt wird, daß

a) mit einem leeren Ersatzteilsortiment begonnen wird;
b) aus einer Ersatzteilgrundmenge ein solches Ersatzteil dem Ersatzteilsortiment hinzugefügt wird, daß den größten Wert W für das Verhältnis

$$W = AI/P$$

liefert, wobei AI der Wert für die Steigerung der Verfügbarkeit V durch das Ersatzteil und P der Preis des Ersatzteiles ist;

c) der Schritt b) solange wiederholt wird, bis das Ersatzteilsortiment vollständig ist.

## Claims

1. Method for determining the availability (V) of a technical facility (1), having a multiplicity of technical systems (S) which, starting from a base level (A), are divided into hierarchically successive system levels (A,B,C), where a survival function (W(S,t)) is calculated for each system (S), which survival function indicates the probability of the system (S) surviving for a time (t); at least one system (S) is designed as a supersystem (OS) of a system level (B,C) which is hierarchically superordinate to the base level (A), which supersystem comprises at least one system (S) - designated as subsystem (US) - of a system level (A,B) which is hierarchically subordinate to the superordinate system level (B,C); the survival function (W(OS,t)) for the supersystem (OS) is established with the aid of the survival function (W(US, t)) of the subsystem (US); the availability (V) is calculated from the survival functions (W(S,t)); a mean fault-free function duration (F(S)) for a system (S) is calculated by means of the relationship

$$F(S) = \int_0^\infty W(S,t)dt$$

where
F(S) is the mean fault-free function duration of the system S and W(S,t) is the survival function of the system (S).

2. Method according to Claim 1, in which each survival function W(S) is calculated numerically for an arbitrary probability distribution.

3. Method according to Claim 2, in which the numerical calculation is performed for times (t) which are separated from one another in steps, the steps being selected by means of adaptive step size matching in such a way that the period of time which is significant for the survival function (W(S,t)) is traversed with a sufficiently dense step size.

4. Method according to Claim 3, in which the adaptive step size matching is carried out with the aid of an interval division method, in particular with a logarithmic bisection method.

5. Method according to one of the preceding claims, in which each system (S) not belonging to the base level (A) is a supersystem (OS).

6. Method according to one of the preceding claims, in which a supersystem (OS) comprises at least two subsystems (US), in particular a multiplicity of subsystems (US).

7. Method according to one of the preceding claims, in which each system (S) comprises a number of components (K), a significance number ($B_K(S)$) being established for each component (K), which significance number indicates the probability with which a fault in the system (S) is caused by said component (K).

8. Method according to Claim 7, in which the survival function (W(S,T)) of a system (S) is established with the aid of the service life for each component (K) and from the significance number ($B_K(S)$) allocated to said component (K).

9. Method according to one of the preceding claims, in which a mean repair duration (R(S)) is calculated for each system (S).

**10.** Method according to Claims 9 and 7,
in which the mean repair duration (R(S)) is determined according to

$$R(S) = \sum_{K=1}^{n} \left(B_K(S) \cdot (RT_K + q_K \cdot LT_K\right)$$

where
R(S) is the mean repair duration for the system S,
$B_K(S)$ is the significance number of the component K of the system S,
n is the number of components K of the system S,
$RT_K$ is the repair time for the component K,
$LT_K$ is the delivery term for a delivery of the component K and
$q_K$ is the probability of the component K not being available immediately.

**11.** Method according to Claim 9 or 10 and according to Claims 1, 2, 3 or 4,
in which the availability (V) is established from the relationship

$$V = \frac{1}{1 + \sum_{S=1}^{N} \left( \frac{G_S}{G} \cdot \frac{R(S)}{F(S)} \right)}$$

where
V is the availability,
N is the number of systems S,
$G_s$ is the number of components K of the system S and
G is the total number of all the components K.

**12.** Method according to one of the preceding claims, in which the technical facility (1) is a power station.

**13.** Use of the method according to one of the preceding claims for determining a functional relationship between costs to be raised for a spare parts range for the technical facility (1) and a maximum availability (V) of the technical facility which follows from that.

**14.** Use according to Claim 13,
in which, for prescribed costs, a spare parts range is selected in such a way as to produce virtually a maximum availability (V).

**15.** Use according to Claim 13,
in which, for a prescribed value for the availability (V), a spare parts range is determined in such a way as to produce virtually minimum costs for the spare parts range.

**16.** Use according to Claim 14 or 15, in which the spare parts range is selected by

a) beginning with an empty spare parts range;
b) adding to the spare parts range from a basic quantity of spare parts a spare part such that the largest value W results for the ratio

$$W = AI/P$$

where AI is the value for the increase in the availability V due to the spare part and P is the price of the spare part;

c) repeating step b) until the spare parts range is complete.

**Revendications**

1. Procédé pour déterminer la disponibilité (V) d'une installation technique (1),
comportant de nombreux systèmes techniques (S) qui, en commençant par un niveau de base (A), sont divisés en niveaux de système hiérarchiquement successifs (A, B, C),
dans lequel
on calcule pour chaque système (S) une fonction de survie (W (S, t)) qui indique la probabilité pour que le système (S) survive un temps (t) ;
au moins un système (S) est conçu comme système supérieur (OS) d'un niveau de système (B, C) qui est hiérarchiquement supérieur au niveau de base (A) et qui comprend au moins un système (S), désigné comme système inférieur (US), d'un niveau de système (A, B) hiérarchiquement inférieur au niveau de système supérieur (B, C) ;
on détermine la fonction de survie (W (OS, t)) pour le système supérieur (OS) à l'aide de la fonction de survie (W (US, t)) du système inférieur (US) ;
on calcule la disponibilité (V) à partir des fonctions de survie (W (S, t)) ;
on calcule une durée de fonctionnement sans défaut moyenne (F (S)) du système (S) avec la relation

$$F(S) = \int_0^\infty W(S,t)dt$$

F (S) étant la durée de fonctionnement sans défaut moyenne du système (S) et W (S, t) la fonction de survie du système (S).

2. Procédé selon la revendication 1,
dans lequel on calcule numériquement chaque fonction de survie W (S) pour une distribution de probabilité quelconque.

3. Procédé selon la revendication 2,
dans lequel le calcul numérique s'effectue pour des temps (t) qui sont séparés les uns des autres en pas, les pas étant choisis de telle sorte par une adaptation de largeur de pas adaptative que l'intervalle de temps significatif pour la fonction de survie (W (S, t)) est écoulé en une largeur de pas suffisamment compacte.

4. Procédé selon la revendication 3,
dans lequel on effectue l'adaptation de largeur de pas adaptative à l'aide d'un procédé de division d'intervalle, notamment avec un procédé, de bisection logarithmique.

5. Procédé selon l'une des revendications précédentes,
dans lequel tout système (S) n'appartenant pas au niveau de base (A) est un système supérieur (OS).

6. Procédé selon l'une des revendications précédentes,
dans lequel un système supérieur (OS) comprend au moins deux systèmes inférieurs (US), notamment plusieurs systèmes inférieurs (US) .

7. Procédé selon l'une des revendications précédentes,
dans lequel chaque système (S) comprend un certain nombre d'éléments (K), un indice d'importance ($B_K$ (S)) étant déterminé pour chaque élément (K), lequel indice d'importance donne la probabilité pour qu'une panne du système (S) soit provoquée par cet élément (K).

8. Procédé selon la revendication 7,
dans lequel on détermine la fonction de survie (W (S, t)) d'un système (S) à l'aide de la durée de vie pour chaque élément (K) et de l'indice d'importance ($B_K$ (S)) attribué à cet élément (K).

**9.** Procédé selon l'une des revendications précédentes,
dans lequel on calcule pour chaque système (S) une durée de réparation moyenne (R (S)).

**10.** Procédé selon les revendications 9 et 7,
dans lequel on détermine la durée de réparation moyenne (R (S)) selon

$$R(S) = \sum_{K=1}^{n} \left(B_K(S) \cdot (RT_K + q_K \cdot LT_K)\right)$$

avec

avec
R (S) la durée de réparation moyenne pour le système S,
$B_K$ (S) l'indice d'importance de l'élément K du système S,
n le nombre des éléments K du système S,
$RT_K$ le temps de réparation pour l'élément K,
$LT_K$ le délai de livraison pour une livraison de l'élément K, et
$q_K$ la probabilité pour que l'élément K ne soit pas immédiatement disponible.

**11.** Procédé selon la revendication 9 ou 10 et selon la revendication 1, 2, 3 ou 4,
dans lequel on détermine la disponibilité (V) à partir de la relation

$$V = \frac{1}{1 + \sum_{S=1}^{N} \left( \frac{G_S}{G} \cdot \frac{R(S)}{F(S)} \right)}$$

avec
V la disponibilité,
N le nombre des systèmes S,
$G_S$ le nombre des éléments K du système S et
G le nombre total de tous les éléments K.

**12.** Procédé selon l'une des revendications précédentes, dans lequel l'installation technique (1) est une centrale électrique.

**13.** Utilisation du procédé selon l'une des revendications précédentes pour la détermination d'une relation fonctionnelle entre le coût d'un assortiment de pièces de rechange destiné à l'installation technique (1) et la disponibilité (V) maximale résultante de l'installation technique.

**14.** Utilisation selon la revendication 13,
dans laquelle on sélectionne pour un coût prédéterminé un assortiment de pièces de rechange de telle sorte qu'il en résulte une disponibilité (V) presque maximale.

**15.** Utilisation selon la revendication 13,
dans laquelle on détermine pour une valeur prédéterminée de la disponibilité (V) un assortiment de pièces de rechange de telle sorte qu'il en résulte un coût presque minimal pour l'assortiment de pièces de rechange.

**16.** Utilisation selon la revendication 14 ou 15,
dans laquelle on choisit l'assortiment de pièces de rechange de telle sorte que

a) on commence avec un assortiment de pièces de rechange vide ;
b) à partir d'un ensemble de base de pièces de rechange, on ajoute à l'assortiment de pièces de rechange une pièce de rechange qui fournit la plus grande valeur W pour le rapport

$$W = AI / P$$

AI étant la valeur pour l'augmentation de la disponibilité V et P le prix de la pièce de rechange ;

c) on répète l'étape b) jusqu'à ce que l'assortiment de pièces de rechange soit complet.

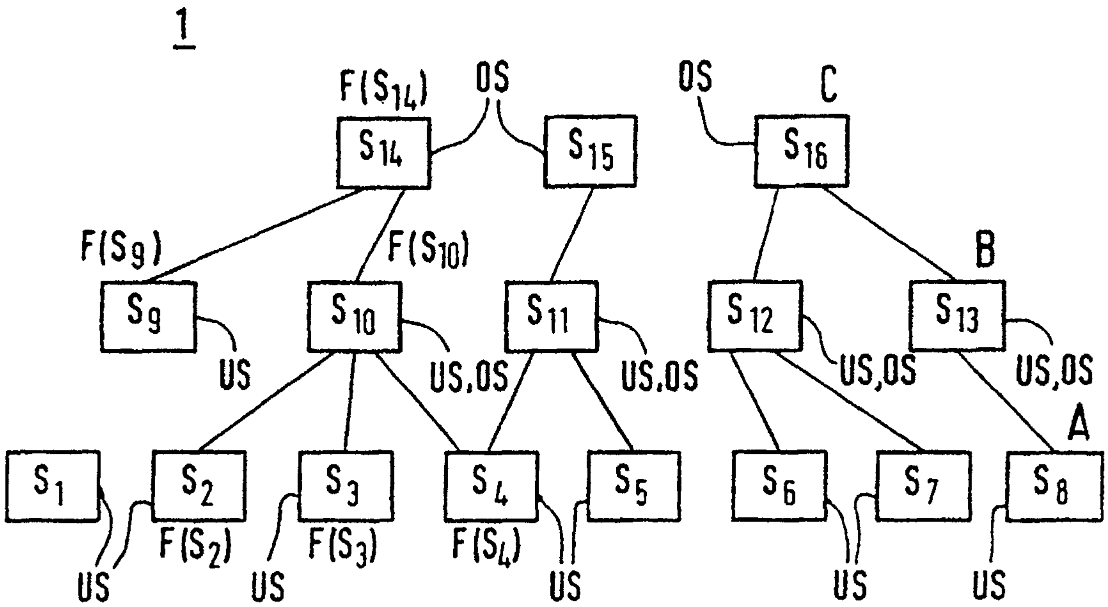
1
F(S14)
OS
S14
S15
OS
C
S16
F(S9)
F(S10)
B
S9
S10
S11
S12
S13
US
US,OS
US,OS
US,OS
US,OS
A
S1
S2
S3
S4
S5
S6
S7
S8
F(S2)
F(S3)
F(S4)
US
US
US
US
US

FIG 1

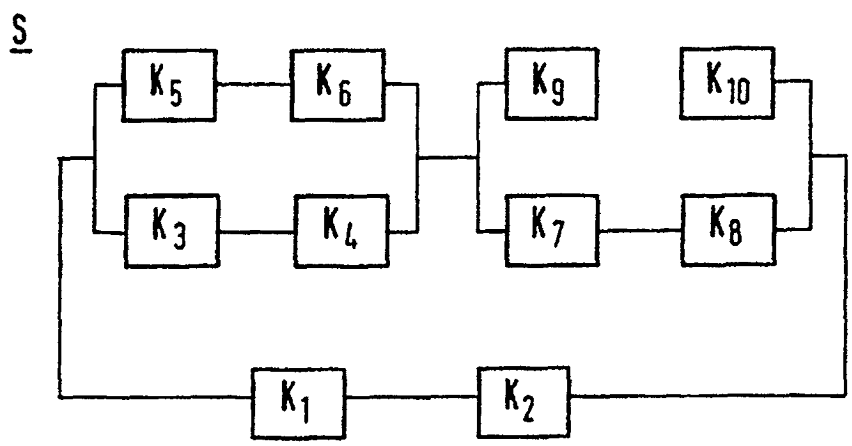
S
K5
K6
K9
K10
K3
K4
K7
K8
K1
K2

FIG 2

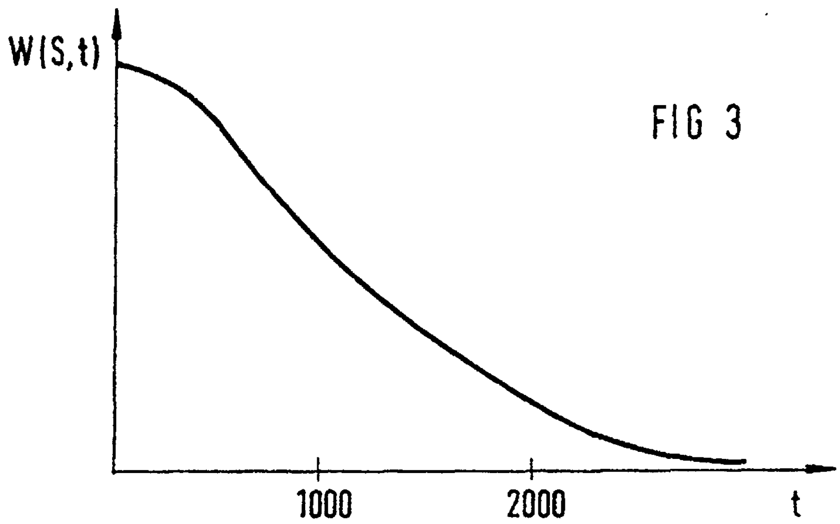
W(S,t)
1000
2000
t

FIG 3

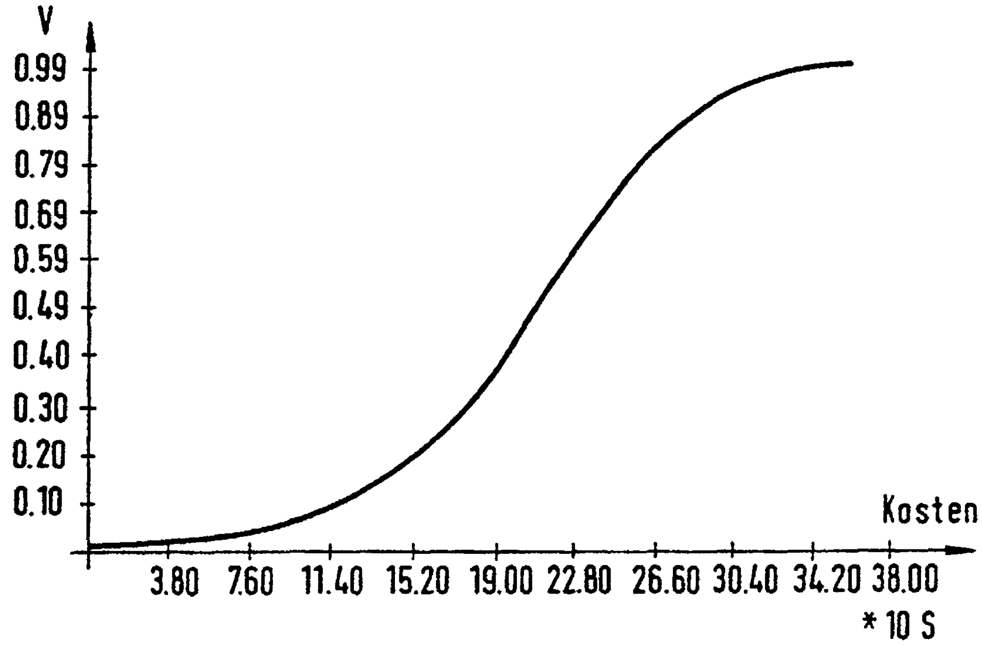
V
0.99
0.89
0.79
0.69
0.59
0.49
0.40
0.30
0.20
0.10
Kosten
3.80
7.60
11.40
15.20
19.00
22.80
26.60
30.40
34.20
38.00
* 10 S

FIG 4